# EUROPEAN PATENT SPECIFICATION

(11) **EP 3 521 172 B1**
(45) Date of publication and mention of the grant of the patent: **14.10.2020**
(21) Application number: 19155219.9
(22) Date of filing: 04.02.2019
(51) Int. Cl.: B64D 27/24, H02J 7/34

(54) **DRIVE SYSTEM FOR AN AIRCRAFT AND METHOD FOR SUPPLYING DRIVE POWER FOR AN AIRCRAFT**
ANTRIEBSSYSTEM FÜR EIN FLUGZEUG UND VERFAHREN ZUR BEREITSTELLUNG VON ANTRIEBSLEISTUNG FÜR EIN FLUGZEUG
SYSTÈME DE COMMANDE POUR AÉRONEF ET PROCÉDÉ DE FOURNITURE DE PUISSANCE D'ENTRAÎNEMENT POUR UN AÉRONEF

(30) Priority: 05.02.2018 DE 102018102525
(43) Date of publication of application: 07.08.2019
(73) Proprietor: Airbus Defence and Space GmbH, 82024 Taufkirchen (DE)
(72) Inventor: Hunkel, Peter, 82024 Taufkirchen (DE)
(74) Representative: LKGLOBAL Lorenz & Kopf PartG mbB Patentanwälte

(56) References cited:
- WO-A1-2017/113338
- US-A1- 2003 075 643
- US-A1- 2009 302 153
- US-A1- 2015 151 844
- US-A1- 2017 190 434

## Description

### Field of the invention

The invention relates to electric drive systems for aircraft applications. In particular, the invention relates to a drive system for an aircraft, to an aircraft having a drive system and to a method for supplying drive power for an aircraft.

### Background of the invention

In the recent past, the energy density and power density of batteries, power electronics and electric motors have reached a threshold which makes it possible to develop electric aircraft with what is referred to as a "distributed electric drive". The term "distributed electric drive" denotes the possibility of integrating electric drives of various types, sizes and numbers in the design of an aircraft in order to obtain particular properties such as e.g. vertical take-off and landing (VTOL). However, in an aircraft which is capable of vertical take-off and landing a thrust-to-weight ratio of greater than 1 is necessary, so that the designs have to be configured in a weight-optimized fashion. In particular, batteries with a high energy density are required. At the same time a sufficient service life of the battery must be ensured. The optimization of the two parameters brings about significant disadvantages in terms of the achievable power density or electrical current of the battery, which is, however, required in a sufficient amount to drive the aircraft.

US 2016/0137305 A1 describes an electric drive arrangement for an aircraft, which drive arrangement has an engine nacelle with a nacelle casing. An electric drive unit of the aircraft is arranged in an interior space of the engine nacelle, which drive unit has in turn a blower. In addition, an electric motor arrangement is arranged in the interior space and is connected to the drive unit in order to feed energy to the drive unit.

US 2014/367510 A1 describes an aircraft having an electric drive arrangement. The aircraft has a fuselage, a wing system which is attached to the fuselage and a rear unit which is fastened to a rear part of the fuselage. The electric drive arrangement is arranged on each side of the fuselage, wherein an electric energy generator and electric storage and supply devices are arranged essentially along a longitudinal axis of symmetry of the fuselage. The aircraft therefore comprises a hybrid motorization.

WO 2017/113338 A1 describes systems, methods, and devices for improving the power performance of vehicle. A hybrid power system comprises a power controller adapted to be in communication with a first power source, a second power source, and a load. The power controller may be configured to detect whether a current drawn by the load exceeds a predetermined threshold, control discharging of the first power source without permitting discharging of the second power source to power the load when the current drawn by the load is less than the predetermined threshold current, and control discharging of the first power source and the second power source to power the load when the current drawn by the load is greater than the predetermined threshold current.

### Summary of the invention

An object of the present invention is to improve the reliability of an electric drive system.

This object is achieved by means of the subject matters of the independent claims. Exemplary embodiments emerge from the dependent claims and the following description.

According to one aspect of the invention, a drive system for an aircraft according to claim 1 is disclosed. The drive system has a first energy store for supplying electrical energy and a second energy store for supplying electrical energy. The drive system also has at least one electric drive for supplying drive power for the aircraft. In addition, the drive system has an energy distribution unit for transmitting the supplied electrical energy of the first energy store and the supplied electrical energy of the second energy store to the at least one electric drive. The energy distribution unit is designed to charge the second energy store using a first portion of the energy supply by the first energy store and at the same time to transmit a second portion of the energy supplied by the first energy store to the at least one electric drive, in order therefore to supply the drive power for the aircraft.

Such a drive system makes it possible to reduce the failure probability, in particular, of a battery-operated aircraft drive. In other words, the drive system according to the invention can make available a type of double-redundant drive system, wherein the first energy store per se already supplies a redundant energy supply for an electric drive, and in addition to the second energy store a further redundancy can be added to the drive system. With the drive system, which supplies high power levels in the short time by means of the second energy store, the necessary power can be provided so that a drive system which can be certified according to air travel standards can be made available with only minor restrictions for the flying time and/or flying distance. By means of the drive system according of the invention it is also possible to make available significantly more overall capacity with the same failure probability. In addition, the drive system can improve the energy density with the same level of reliability.

The first and/or the second energy store can have at least one battery. The first energy store can therefore also be referred to as the first battery and the second energy store as the second battery. Both batteries together can also be referred to as a battery system. A battery can be understood here to be a vessel in which electrochemical energy is converted into electrical energy. The second battery is preferably to have a comparatively high quotient of the power density to the energy density. For example, the second energy store is a supercapacitor or ultracapacitor, which will be explained in more detail below. It is possible that the second energy store also has two or more supercapacitors which can be operated independently of one another. It may be provided that the first energy store has a higher energy density than the second energy store but a lower power density. Despite a relatively low energy density of the second energy store or of the supercapacitor, the drive system according to the invention provides a battery system which is overall lighter in weight, more robust and nevertheless certifiable, and therefore also a drive system of the aircraft. In order to transmit the electrical energy between the energy stores and from the energy stores to the electric drive it is possible to provide electric power lines. The first energy store is therefore designed to transmit electrical energy both to the electric drive and to the second energy store. There may be provision that the second energy store transmits electrical energy only to the electric drive but not to the first energy store. The second energy store can be recharged by the transmission of electrical energy from the first energy store to the second energy store. For example, the second energy store is at least partially discharged during a specific flying manoeuvre, for example a take-off process or a landing process, and is subsequently recharged by the first energy store. The first energy store can consequently supply sufficient electrical energy for a cruise flight or en-route flight of the aircraft to the electric drive, where the first energy store transmits electrical energy to the second energy store and therefore recharges said second energy store. The drive system according to the invention can therefore be considered to be a primary electrical energy supply for the drive of the aircraft.

The energy distribution system can have a control unit, for example a computer unit, and/or electric lines for conducting electrical current. In this context, the control unit of the energy distribution unit can perform open-loop or closed-loop control of the transmission of the electrical energy from the first energy store to the second energy store during the charging process. In addition, the control unit can set the outputting of the electrical energy from the first energy store to the electric drive and also the outputting of the electric energy from the second energy store to the electric drive. The electric lines can have a first electric connecting line from the first energy store to the electric drive and a second electric connecting line from the second energy store to the electric drive. Both connecting lines can be connected to the electric drive via an electric main line, referred to as a busbar. The drive system can have a multiplicity of electric drives. The multiplicity of electric drives or motors can then be connected to the main line of the energy distribution system via power electronics. In the second connecting line for connecting the second energy store to the electric drive, a direct voltage converter (DC/DC converter) can be provided which converts a direct voltage fed by the second energy store into a direct voltage with a relatively high, relatively low or inverted voltage level in comparison with the voltage which has been fed. The DC/DC converter can, in particular, regulate the direct voltage which has been fed to a voltage level of the first battery. This is explained in more detail in the description of the figures.

According to one embodiment of the invention, the energy distribution unit is designed to transmit the supplied electrical energy of the second energy store to the at least one electric drive only if power required by the drive exceeds a predefined limiting value.

In this case, that is to say electrical energy is transmitted both from the first and from the second energy store to the electric drive, whereby said electric drive is driven. There can be provision that the second energy store supplies electrical energy or electrical power only for compensating a power peak of the electric drive during the take-off process and/or during the landing process of the aircraft. Therefore, a limiting value can be predetermined starting from which the energy distribution unit connects the second energy store as it were to the power system for the electric drive, so that during said power peak energy can be supplied to the electric drive both by the first energy store and by the second energy store, in order therefore to ensure the power required by the electric drive.

After the limiting value of the power required by the electric drive has been undershot again, the transmission of power from the second energy store to the electric drive is interrupted gain, so that the electrical energy or the electrical power is output again to the electric drive only by the first energy store. It is possible that the first energy store outputs electrical energy to the drive during the entire flight.

According to a further embodiment of the invention, the energy distribution unit is designed to transmit only the supplied electrical energy of the first energy store to the at least one electric drive if the power required by the drive undershoots the predefined limiting value.

In this case, no electrical energy is therefore transmitted from the second energy store to the electric drive. That is to say that at the end of the power peak of the electric drive, at which the limiting value for the required power is undershot again, the transmission of electrical energy or electrical power from the second energy store to the electric drive is interrupted, so that only electrical energy or electrical power from the first energy store is transmitted to the electric drive. The predefined limiting value is regularly undershot, for example, in cruise flight or during a ground operation of the aircraft, so that in these operating states of the aircraft it is sufficient to supply the electrical energy or electrical power from the first energy store to the electric drive.

According to a further embodiment of the invention, the second energy store is a supercapacitor. It is also possible that the second energy store is a battery with a comparatively high power density.

A supercapacitor can be understood to be an electrochemical energy store, in particular an electrochemical capacitor, which has a significantly lower energy density in comparison with conventional energy stores, but a significantly higher power density than conventional energy stores or accumulators.

According to a further embodiment of the invention, the first energy store has a battery cell module with a multiplicity of bundles of battery cells which are connected in series, wherein the multiplicity of bundles are each connected in parallel with one another. It is also possible that the first energy store has a fuel cell system with at least one fuel cell.

In other words, an individual bundle of the first energy store has a plurality of battery cells which are connected in series with one another. The individual bundles of the multiplicity of bundles are in turn connected in parallel, in order therefore to make available redundancy of the battery cell module and therefore of the first energy store. As a result of the parallel connection of a plurality of bundles in each case, it is possible to increase the redundancy of individual bundles of the battery cell module. This can mean that individual bundles of the battery cell module can fail, for example as a result of a failure of individual battery cells within a bundle, and nevertheless reliable operation of the drive system is ensured with the remaining bundle of the battery cell module. The battery cells of the first energy store can be, for example, lithium-ion batteries which are connected in series. For example, the first energy store 40 has bundles which are connected in parallel, each with 200 battery cells which are connected in series. It is possible that the second energy store also has a lithium-ion battery.

According to a further embodiment of the invention, the electrical energy which is supplied by the second energy store is dependent on a failure probability of individual bundles of the multiplicity of bundles of the first energy store.

Owing to its design, the first energy store or the battery cell module of the first energy store has a specifiable failure probability. The configuration of the second energy store is based on this failure probability. According to the invention, the second energy store is configured to supply electrical energy to the electric drive such that the electrical energy which is supplied by the second energy store is proportional to the failure probability of individual bundles of battery cells or battery cells of the first energy store. Therefore, the higher the failure probability of the individual bundles or battery cells of the first energy store, the higher is also the quantity of energy of the second energy store, in order therefore to compensate for a possibly reduced output of electrical power from the first energy store to the electric drive, so that the remaining electrical power which is supplied by the first energy store is still sufficient, together with the power (backup power) supplied by the second energy store, to reliably operate the electric drive even in case of power peaks such as take-off process or landing, despite the failure of bundles in the first energy store.

According to one preferred embodiment of the invention, the electrical energy which is supplied by the second energy store is dependent on a failure probability of individual bundles of the multiplicity of bundles and the product of power above the previously mentioned limiting value and the period of use of the second energy store. The period of use denotes here the time period during which electrical power supplied by the second energy store is output to the electric drive. It can be provided that the second energy store outputs electrical power to the electric drive over a time period of only one minute or of only 10 to 20 seconds.

According to a further embodiment of the invention, a ratio of a quotient of the power density to the energy density of the second energy store and of a quotient of the power density to the energy density of the first energy store is at least 30, preferably at least 60.

As already indicated, the power density of the second energy store is higher than the power density of the first energy store. In addition, the energy density of the second energy store is lower than that of the first energy store. The second energy store, which is, for example, a supercapacitor, is therefore suitable for outputting a comparatively large amount of power to the electric drive in a short time.

In an exemplary critical case, up to four bundles of the first energy store can therefore fail during flight. At the same time, the aircraft must still be capable of being started if six bundles already no longer function at the start. The necessary backup capacity of the second energy store results from this, together with the period of use. The second energy store, that is to say the supercapacitor, can keep the peak current of an emergency landing method at the level of the maximum permissible current for the first energy store, that is to say for not more than e.g. one minute, which ultimately results in the backup capacity to be supplied by the second energy store. Despite a significantly lower energy density of the second energy store, a battery system is therefore obtained which is overall significantly lighter, more robust and certifiable. This context will be clarified below on the basis of a specific example of the drive system according to the invention:
The exemplary configuration variables relate here to a battery system for a VTOL aircraft:

### a) Configuration values of the aircraft:

| | |
|---|---|
| Maximum take-off weight of the aircraft: | 1500 kg |
| Power demand for en-route flight (250 km/h): | 60 kW |
| Power demand for hovering flight (0 km/h): | 600 kW for at least 25 s |
| Maximum battery weight of the battery system: | 550 kg |
| Number of failed bundles before take-off: | 6 |
| Number of failed bundles during flight: | 4 |

An optimization objective can be here to maximum the capacity [kWh] of the entire battery system.

### b) First energy store (first battery):

| | |
|---|---|
| Battery cells: | Lithium-ion battery cells |
| Battery system: | 40 bundles in parallel to form |
| | 200 rows in series in each case |
| Number of cells: | 8000 cells |
| Energy density: | 175 Wh/kg |
| Power density: | 240 W/kg |
| C factor (power density/energy density): | 1.37C |
| Capacity: | 85.7 kWh |
| Maximum power: | 1.37C^{∗}85.7 kWh=117 kW |
| Weight: | 490 kg |

### c) Second energy store (second battery):

| | |
|---|---|
| Battery system: | Lithium-ion batteries |
| Energy density: | 60 Wh/kg |
| Capacity: | 3.66 kWh |
| Power density: | 8400 W/kg |
| C factor (power density/energy density): | 140C |
| Maximum power for approximately 20 s: | 140C^{∗}3.66 kWh=512 kW |
| Weight: | 60 kg |

### d) System composed of first and second energy stores:

| | |
|---|---|
| Ratio of C factor C2/C1: | 102.2 |
| Maximum power: | 629 kW |
| Power for failure compensation and charging: | 29 kW |
| No. of bundles which can be compensated for first battery: | 10 |
| Charging time for second battery: | 8 min |
| Weight: | 550 kg |
| Maximum capacity: | 89.4 kWh |

### e) Example of use of a single battery for the drive system:

| | |
|---|---|
| Cells: | Lithium-ion batteries |
| System: | 40 bundles in parallel to form |
| | 200 cells in series in each case |
| Number of cells: | 8000 cells |
| Energy density: | 125 Wh/kg |
| Power density: | 1450 W/kg |
| C factor (power density/energy density): | 11.6C |
| Maximum power: | 11.6^{∗}69 kWh=800 kW |
| Power for failure compensation: | 200 kW |
| Number of bundles which can be compensated: | 10 |
| Weight: | 550 kg |
| Capacity: | 69 kWh |

The achievable improvement by means of the drive system according to the invention with two batteries, that is to say a first and a second energy store compared to the use of a single battery for the drive system corresponds to an approximate capacity gain with the same weight and same failure compensation of 20.4 kWh or approximately 30%.

The drive system according to the invention therefore provides not only an internally redundant first battery with a plurality of parallel bundles and in each case a plurality of cells in series with a high energy density but also a second battery with a comparatively high power density as a further redundant power source. The second battery can also be of redundant design per se. The two batteries can be connected to the primary busbar of the aircraft via a direct current/direct current converter (DC/DC converter). In turn power electronics and motors can be connected to this busbar. This second, high-power-density battery is preferably used exclusively to cover a peak current at take-off/landing of the aircraft, in order to operate the high-energy-density first battery within the permissible operating limits. The second battery is charged again by means of the first battery after take-off has taken place, with the result that a state of charge of the first battery still permits emergency landing with partial failure of individual battery bundles. The configuration of the capacitor of the second battery can be calculated here from the failure probability of individual cells or bundles of the first battery, in order to make available this capacitor for the time of the emergency landing procedure.

According to a further embodiment of the invention, the drive system has at least one motor which is designed to supply the required drive power for the aircraft during a cruise flight, by using exclusively the supplied electrical energy of the first energy store.

In particular, the supplied electrical energy of the first energy store is selected in order therefore to supply the electric drive and therefore the motor with sufficient electrical energy or sufficient electrical power, so that the aircraft can carry out an en-route flight, that is to say a cruise flight, exclusively using the supplied electrical energy of the first energy store. During a power peak, the second energy store can then be connected to the first energy store, so that both energy stores together supply electrical energy for the electric drive or output electrical power thereto.

The electric drive can therefore have a multiplicity of motors which are operated in en-route flight exclusively using the supplied electrical energy of the first energy store. For example, the motor is a propeller motor of the aircraft.

According to one aspect of the invention, an aircraft with the drive system described above and below is disclosed.

The aircraft can be, for example, an aircraft, in particular a propeller-operated aircraft. In one example, the aircraft is an aircraft which is capable of vertical take-off.

According to one embodiment of the invention, the aircraft is a manned aircraft. However, it also possible that the aircraft is an unmanned aircraft, for example a drone.

According to one aspect of the invention, a method for supplying drive power for an aircraft according to claim 10 is disclosed. In one step of the method, electrical energy is supplied from a first energy store. In a further step, electrical energy is supplied from a second energy store. In addition, in a further step, simultaneous transmission of the supplied electrical energy of the first energy store and of the supplied electrical energy of the second energy store to at least one electric drive of the aircraft takes place during a take-off process of the aircraft, wherein the second energy store is at least partially discharged. In a further step which follows the discharging step of the second energy store, recharging of the second energy store takes place by means of the first energy store to a predefined setpoint value of a state of charge of the second energy store, wherein the charging of the second energy store takes place during a cruise flight of the aircraft.

The individual method steps can be carried out in the specified sequence. However, the specified method steps can also be carried out in any desired sequence.

According to one embodiment of the invention, in a further step simultaneous transmission of the supplied electrical energy of the first energy store and of the supplied electrical energy of the second energy store to the at least one electric drive of the aircraft takes place during a landing process of the aircraft, wherein the second energy store is at least partially discharged.

According to a further embodiment of the invention, the supplied electrical energy of the second energy store is transmitted to the at least one electric drive of the aircraft exclusively during the take-off process and the landing process of the aircraft.

### Brief description of the figures

- Fig. 1: shows a drive system according to an exemplary embodiment of the invention,
- Fig. 2: shows an energy density/power density diagram for a selection range for lithium-ion batteries according to an exemplary embodiment of the invention,
- Fig. 3: shows a flying time/current diagram for various flying states of an aircraft according to an exemplary embodiment of the invention,
- Fig. 4: shows an aircraft having a drive system according to an exemplary embodiment of the invention, and
- Fig. 5: shows a flowchart for a method according to an exemplary embodiment of the invention.

### Detailed description of exemplary embodiments

The illustrations in the figures are schematic and not to scale.

If the same reference symbols are used in different figures in the following description of figures, they denote identical or similar elements. Identical or similar elements can, however, also be denoted by different reference symbols.

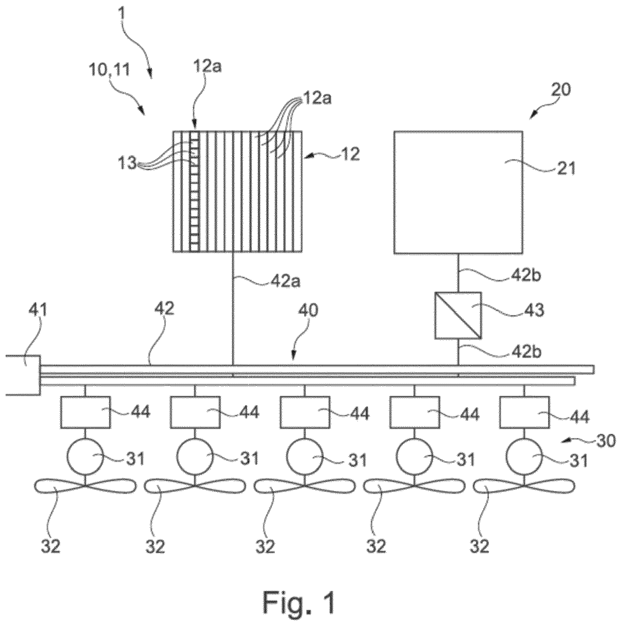

Fig. 1 shows a drive system 1 for an aircraft having a first energy store 10 for supplying electrical energy and a second energy store 20, for example supercapacitor 21, for supplying electrical energy. The first energy store 10 has a battery cell module 11 with a multiplicity of bundles 12 of battery cells 13 which are connected in series. In Fig. 1 it is apparent that the multiplicity of bundles 12 are each connected in parallel with one another, and the bundles 12 together form the battery cell module 11 or the first energy storage unit 10. The bundles 12 each have a plurality of battery cells 13 which are connected one behind the other, that is to say in series, and which can also simply be referred to as cells. The electrical energy which is supplied by the second energy store 20 can be dependent here on a failure probability of individual bundles 12a of the multiplicity of bundles 12.

In addition, an electric drive 30 having a plurality of motors 31 for supplying drive power for the aircraft 100 is provided. The drive system 1 has an energy distribution unit 40 for transmitting the supplied electrical energy of the first energy store 10 and the supplied electrical energy of the second energy store 20 to the at least one electric drive 30. In this context, the electrical energy is transmitted from the first energy store 10 via a first electric connecting line 42a to an electric main line 42, what is referred to as a primary busbar of the aircraft 100, from which the electrical energy of the first energy store 10 is then transmitted to the individual motors 31 of the electric drive 30.

The energy distribution unit 40 is also designed to transmit the supplied electrical energy of the second energy store 20 to the at least one electric drive 30. In this context, the electrical energy is transmitted from the second energy store 20 via a second electric connecting line 42b to the electric main line 42 from which the electrical energy of the second energy store 20 is then transmitted to the individual motors 31 of the electric drive 30. The energy distribution unit 40 is designed to transmit exclusively the supplied electrical energy of the first energy store 10 to the at least one electric drive 30 if the power required by the drive 30 undershoots a predefined limiting value. In the second connecting line 42b a voltage converter 43 can be provided as a component of the energy distribution unit 40. The energy distribution unit 40 also has power electronics 44 which are each connected upstream of the motors 31, that is to say are arranged between the electric main line 42 and the motors 31. Independent setting of the drive power which is output by the motors 31 is possible by means of the power electronics.

The energy distribution unit 40 can therefore have a plurality of connecting lines 42a, 42b and the electric main line 42. In addition, the energy distribution unit 40 can have a control unit 41 in the form of a central processing unit or a processor which controls the energy distribution unit 40 in such a way that the energy of the first energy store 10 and the energy of the second energy store 20 can, as described, be transmitted to the electric drive 30. In particular, the control unit 41 is designed to control the drive system 1 in such a way that the second energy store 20 is charged by using a first portion of the electrical energy supplied by the first energy store 10, and at the same time a second portion of the electrical energy supplied by the first energy store 10 is transmitted to the at least one electric drive 30, in order therefore to supply the drive power for the aircraft 100. In addition, the control unit 41 is designed to control the drive system 1 in such a way that the supplied electrical energy of the second energy store 20 is transmitted to the at least one electric drive 30 only if power required by the drive 30 exceeds a predefined limiting value. In addition, the control unit 41 is designed to control the drive system 1 in such a way that only the supplied electrical energy of the first energy store 10 is transmitted to the at least one electric drive 30 if the power required by the drive 30 undershoots the predefined limiting value.

The energy distribution unit 40 is designed to charge the second energy store 20 by using a first portion of the energy supplied by the first energy store 10, and at the same time to transmit a second portion of the energy supplied by the first energy store 10 to the at least one electric drive 30 with the motors 31, wherein ultimately the drive power for the aircraft 100 is supplied by the motors 31. For example, the motors 31 are embodied as propeller motors which have a propeller 32. These propeller motors therefore supply drive power for the aircraft 100 by setting the propellers 32 in rotation, so that a propulsion force acting on the aircraft 100 is generated. The energy distribution unit 40 is designed, in particular, to transmit the supplied electrical energy of the second energy store 20 exclusively then to the at least one electric drive 30 if the power required by the drive 30 exceeds the predefined limiting value.

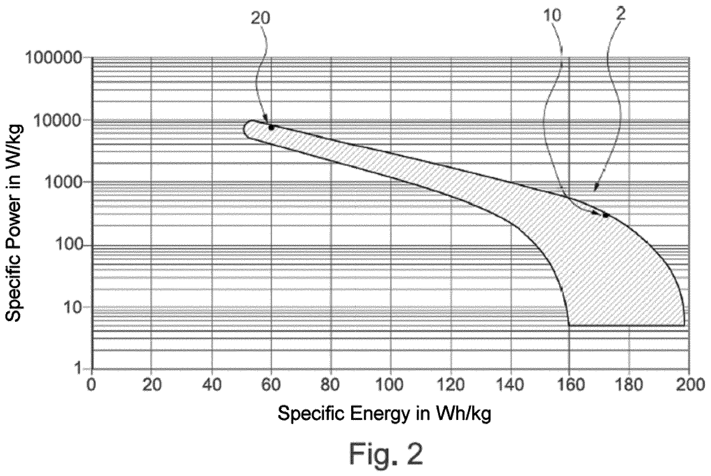

Fig. 2 shows an energy density/power density diagram for a selection region 2 of lithium-ion batteries. In this context, the power density (specific power in W/kg) is plotted logarithmically against the energy density (specific energy Wh/kg). In each case a preferred exemplary embodiment of the first energy store 10 and of the second energy store 20 is characterized by arrows. It is apparent that the first energy store 10 has a significantly higher energy density than the second energy store 20. It is also apparent that the second energy store 20 has a significantly higher power density than the first energy store 10. For example, the energy density of the first energy store 10 is approximately 175 Wh/kg and that of the second energy store 20 is approximately 60 Wh/kg. The power density of the second energy store 20 is, for example, approximately between 8000 W/kg and 9000 W/kg, it is, for example, approximately 8400 W/kg. The power density of the first energy store 10 is, for example, approximately between 200 W/kg and 400 W/kg, it is, for example, approximately 240 W/kg.

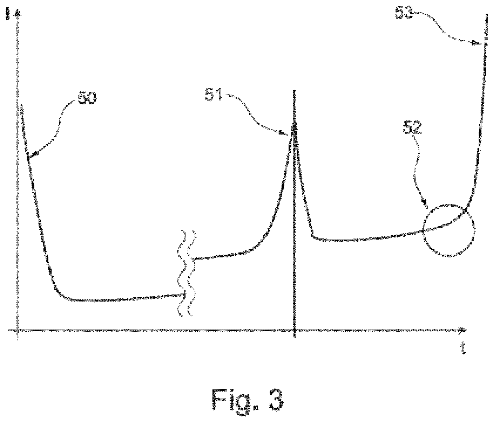

Fig. 3 shows a flying time/current diagram for various flying states of an aircraft 100. In this context, the electric current I which is required or is to be supplied for the electric drive 30 is plotted against the time t during various flying manoeuvres. Fig. 3 shows, in particular, the qualitative current profile I for a flight with an aborted landing 51 or go-around 51 of the aircraft 100 and delayed landing 53. The current I rises over the flight time t at the required power, since the voltage of the first battery, that is to say of the first energy store 10, drops in the case of discharging. In the case of aborted landing 51, the maximum current demand or power demand is not achieved, since the aircraft 100 would not be decelerated to the minimum flying speed. The maximum current flow I is reached at the landing 53 which takes place with the largely discharged first battery. The critical time 52 for the proof of successful emergency landing, necessary for certification according to air travel standards, when the first battery fails, that is to say failure of individual bundles 12 of the first battery, occurs just before the initiation of the landing, that is to say not at the go-around 51. This time is marked in Fig. 3 by a circle. At this critical time, the second energy store 20, that is to say the second battery, can still output sufficient power to the electric drive 30 of the aircraft 100, so that safe emergency landing 53 is possible.

Since in the event of failure of a battery cell 13 the entire bundle 12a fails, the remaining bundles 12 together still provide the necessary power in order to be able to successfully carry out a second landing 53 after an aborted landing 51. The failure probability of a battery cell 13 therefore defines the bundle failure probability. The necessary power can be provided with the inventive drive system 1 which supplies high power levels at short notice by means of the second energy store 20, so that a drive system 1 which can be certified according to air travel standards can be supplied with only small restrictions on the flying time and/or flying distance. In other words, as a result the state of charge of the two energy stores 10, 20 permits a last landing 53 which is safe according to certification regulations, with a first battery 10 which has partially failed.

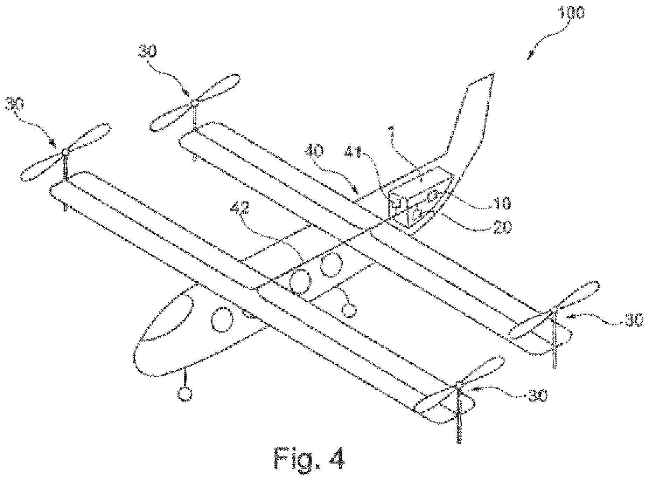

Fig. 4 shows an aircraft 100 with the drive system 1 illustrated in Fig. 1. The aircraft 100 therefore has the drive system 1 with the first energy store 10 and the second energy store 20. In addition, the energy distribution unit 40 with the control unit 41 and the electric main line 42, via which the two energy stores 10, 20 are connected to the electric drive 30, are illustrated.

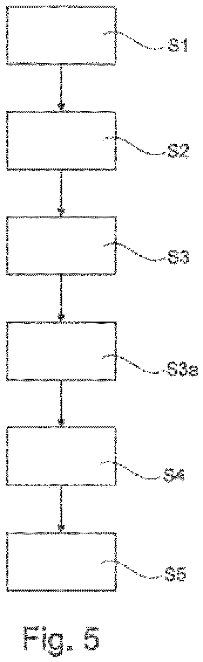

Fig. 5 shows a flowchart for a method for supplying drive power for an aircraft 100. In one step S1 of the method, electrical energy from a first energy store 10 is supplied. In a further step S2 of the method, electrical energy from a second energy store 20 is supplied. In a further step S3, simultaneous transmission of the supplied electrical energy of the first energy store 10 and the supplied electrical energy of the second energy store 20 to at least one electric drive 30 of the aircraft 100 takes place during a take-off process of the aircraft 100, wherein the first energy store 20 is at least partially discharged. In a further step S4, recharging of the second energy store 20 takes place by means of the second energy store 10 to a predefined setpoint value of a state of charge of the second energy store 20 after the at least partial discharging of the second energy store 20, wherein the recharging of the second energy store 20 takes place during a cruise flight of the aircraft 100.

Then, in a further step S5, simultaneous transmission of the supplied electrical energy of the first energy store 10 and of the supplied electrical energy of the second energy store 20 to the at least one electric drive 30 of the aircraft 100 takes place during a landing process of the aircraft 100, wherein the second energy store 20 is again at least partially discharged.

In a further step S3a there can be provision that transmission of the supplied electrical energy of the second energy store 20 to the at least one electric drive 30 of the aircraft 100 takes place exclusively during the take-off process and the landing process of the aircraft 100.

In addition, it is to be noted that "comprising" does not exclude any other elements or steps and "a" or "an" does not exclude a plurality. In addition it is to be noted that features or steps which have been described with reference to one of the above exemplary embodiments can also be used in combination with other features or steps of other exemplary embodiments described above. Reference symbols in the claims are not to be considered restrictive.

## Claims

1. Drive system (1) for an aircraft (100), having:
a first energy store (10) for supplying electrical energy;
a second energy store (20) for supply electrical energy;
at least one electric drive (30) for supplying drive power for the aircraft;
an energy distribution unit (40) for transmitting the supplied electrical energy of the first energy store (10) and the supplied electrical energy of the second energy store (20) to the at least one electric drive (30);
wherein the energy distribution unit (40) is designed to charge the second energy store (20) using a first portion of the energy supplied by the first energy store (10) and at the same time to transmit a second portion of the energy supplied by the first energy store (10) to the at least one electric drive (30), in order therefore to supply the drive power for the aircraft (100);
**characterised in that** the second energy store (20) is configured to supply electrical energy to the electric drive (30) such that the electrical energy which is supplied by the second energy store (20) is proportional to a failure probability of individual bundles of battery cells or battery cells of the first energy store (10).

2. Drive system (1) according to Claim 1,
wherein the energy distribution unit (40) is designed to transmit the supplied electrical energy of the second energy store (20) to the at least one electric drive (30) only if power which is required by the driver (30) exceeds a predefined limiting value.

3. Drive system (1) according to Claim 2,
wherein the energy distribution unit (40) is designed to transmit only the supplied electrical energy of the first energy store (10) to the at least one electric drive (30) if the power required by the driver (30) undershoots the predefined limiting value.

4. Drive system (1) according to one of the preceding claims,
wherein the second energy store (20) is a supercapacitor (21).

5. Drive system (1) according to one of the preceding claims,
wherein the first energy store (10) has a battery cell module (11) with a multiplicity of bundles (12) of battery cells (13) connected in series, wherein the multiplicity of bundles (12) are each connected in parallel with one another.

6. Drive system (1) according to one of the preceding claims,
wherein a ratio of a quotient of the power density to the energy density of the second energy store and of a quotient of the power density to the energy density of the first energy store is at least 30, preferably at least 60.

7. Drive system (1) according to one of the preceding claims,
wherein the drive system (100) has at least one motor (31) which is designed to supply the required drive power for the aircraft (100) during a cruise flight, by using exclusively the supplied electrical energy of the first energy store (10).

8. Aircraft (100) having a drive system (1) according to one of the preceding claims.

9. Aircraft according to Claim 8,
wherein the aircraft (100) is a manned aircraft.

10. Method of supplying drive power to an aircraft (100), having the steps:
supplying electrical energy from a first energy store (10, S1);
supplying electrical energy from a second energy store (20, S2);
simultaneously transmitting the supplied electrical energy of the first energy store (10) and the supplied electrical energy of the second energy store (20) to at least one electric drive (30) of the aircraft (100) during a take-off process of the aircraft (100), wherein the second energy store (20) is at least partially discharged (S3);
charging the second energy store (20) by means of the first energy store (10) to a predefined setpoint value of a state of charge of the second energy store (20) after the at least partial discharging of the second energy store (20), wherein the charging of the second energy store (20) takes place during a cruise flight of the aircraft (100) (S4);
**characterised in that** the second energy store (20) is configured to supply electrical energy to the electric drive (30) such that the electrical energy which is supplied by the second energy store (20) is proportional to a failure probability of individual bundles of battery cells or battery cells of the first energy store (10).

11. Method according to Claim 10, comprising:
simultaneously transmitting the supplied electrical energy of the first energy store (10) and the supplied electrical energy of the second energy store (20) to the at least one electric drive (30) of the aircraft (100) during a landing process of the aircraft (100), wherein the second energy store (20) is at least partially discharged (S5).

12. Method according to Claim 11, comprising:
transmitting the supplied electrical energy of the second energy store (20) to the at least one electric drive (30) of the aircraft (100) exclusively during the take-off process and the landing process of the aircraft (100, S3a).

## Patentansprüche

1. Antriebssystem (1) für ein Luftfahrzeug (100), Folgendes aufweisend:
einen ersten Energiespeicher (10) zum Zuführen elektrischer Energie,
einen zweiten Energiespeicher (20) zum Zuführen elektrischer Energie,
mindestens einen elektrischen Antrieb (30) zum Zuführen von Antriebsleistung für das Luftfahrzeug,
eine Energieverteilungseinheit (40) zum Übertragen der zugeführten elektrischen Energie des ersten Energiespeichers (10) und der zugeführten elektrischen Energie des zweiten Energiespeichers (20) zu dem mindestens einen elektrischen Antrieb (30),
wobei die Energieverteilungseinheit (40) dazu ausgelegt ist, den zweiten Energiespeicher (20) unter Verwendung eines Teils der Energie, die durch den ersten Energiespeicher (10) zugeführt wird, zu laden und gleichzeitig einen zweiten Teil der Energie, die durch den ersten Energiespeicher (10) zugeführt wird, zu dem mindestens einen elektrischen Antrieb (30) zu übertragen, um damit die Antriebsleistung für das Luftfahrzeug (100) zuzuführen,
**dadurch gekennzeichnet, dass**
der zweite Energiespeicher (20) dazu gestaltet ist, elektrische Energie derart zu dem elektrischen Antrieb (30) zu führen, dass die elektrische Energie, die durch den zweiten Energiespeicher (20) zugeführt wird, proportional zu einer Ausfallwahrscheinlichkeit einzelner Bündel von Batteriezellen oder Batteriezellen des ersten Energiespeichers (10) ist.

2. Antriebssystem (1) nach Anspruch 1,
wobei die Energieverteilungseinheit (40) dazu ausgelegt ist, die zugeführte elektrische Energie des zweiten Energiespeichers (20) nur dann zu dem mindestens einen elektrischen Antrieb (30) zu übertragen, wenn die Leistung, die von dem Antrieb (30) benötigt wird, einen vordefinierten Grenzwert überschreitet.

3. Antriebssystem (1) nach Anspruch 2,
wobei die Energieverteilungseinheit (40) dazu ausgelegt ist, nur die zugeführte elektrische Energie des ersten Energiespeichers (10) zu dem mindestens einen elektrischen Antrieb (30) zu übertragen, wenn die Leistung, die von dem Antrieb (30) benötigt wird, den vordefinierten Grenzwert unterschreitet.

4. Antriebssystem (1) nach einem der vorhergehenden Ansprüche,
wobei der zweite Energiespeicher (20) ein Superkondensator (21) ist.

5. Antriebssystem (1) nach einem der vorhergehenden Ansprüche,
wobei der erste Energiespeicher (10) ein Batteriezellenmodul (11) mit einer Vielzahl von Bündeln (12) von Batteriezellen (13), die in Reihe geschaltet sind, aufweist, wobei die Vielzahl von Bündeln (12) jeweils parallel zueinander geschaltet sind.

6. Antriebssystem (1) nach einem der vorhergehenden Ansprüche,
wobei ein Verhältnis eines Quotienten der Leistungsdichte zur Energiedichte des zweiten Energiespeichers und eines Quotienten der Leistungsdichte zur Energiedichte des ersten Energiespeichers mindestens 30, vorzugsweise mindestens 60 beträgt.

7. Antriebssystem (1) nach einem der vorhergehenden Ansprüche,
wobei das Antriebssystem (100) mindestens einen Motor (31) aufweist, der dazu ausgelegt ist, die benötigte Antriebsleistung für das Luftfahrzeug (100) während eines Reiseflugs unter Verwendung ausschließlich der zugeführten elektrischen Energie des ersten Energiespeichers (10) zuzuführen.

8. Luftfahrzeug (100), ein Antriebssystem (1) nach einem der vorhergehenden Ansprüche aufweisend.

9. Luftfahrzeug nach Anspruch 8,
wobei das Luftfahrzeug (100) ein bemanntes Luftfahrzeug ist.

10. Verfahren zum Führen von Antriebsleistung zu einem Luftfahrzeug (100), die folgenden Schritte aufweisend:
Zuführen elektrischer Energie von einem ersten Energiespeicher (10, S1),
Zuführen elektrischer Energie von einem zweiten Energiespeicher (20, S2),
gleichzeitiges Übertragen der zugeführten elektrischen Energie des ersten Energiespeichers (10) und der zugeführten elektrischen Energie des zweiten Energiespeichers (20) zu mindestens einem elektrischen Antrieb (30) des Luftfahrzeugs (100) während eines Startprozesses des Luftfahrzeugs (100), wobei der zweite Energiespeicher (20) zumindest teilweise entladen wird (S3),
Laden des zweiten Energiespeichers (20) mittels des ersten Energiespeichers (10) auf einen vordefinierten Sollwert eines Ladezustandes des zweiten Energiespeichers (20) nach dem mindestens teilweisen Entladen des zweiten Energiespeichers (20), wobei das Laden des zweiten Energiespeichers (20) während eines Reiseflugs des Luftfahrzeugs (100) stattfindet (S4),
**dadurch gekennzeichnet, dass**
der zweite Energiespeicher (20) dazu gestaltet ist, elektrische Energie derart zu dem elektrischen Antrieb (30) zu führen, dass die elektrische Energie, die durch den zweiten Energiespeicher (20) zugeführt wird, proportional zu einer Ausfallwahrscheinlichkeit einzelner Bündel von Batteriezellen oder Batteriezellen des ersten Energiespeichers (10) ist.

11. Verfahren nach Anspruch 10, umfassend:
gleichzeitiges Übertragen der zugeführten elektrischen Energie des ersten Energiespeichers (10) und der zugeführten elektrischen Energie des zweiten Energiespeichers (20) zu dem mindestens einen elektrischen Antrieb (30) des Luftfahrzeugs (100) während eines Landeprozesses des Luftfahrzeugs (100), wobei der zweite Energiespeicher (20) zumindest teilweise entladen wird (S5).

12. Verfahren nach Anspruch 11, umfassend:
Übertragen der zugeführten elektrischen Energie des zweiten Energiespeichers (20) zu dem mindestens einen elektrischen Antrieb (30) des Luftfahrzeugs (100) ausschließlich während des Startprozesses und des Landeprozesses des Luftfahrzeugs (100, S3a).

## Revendications

1. Système d'entraînement (1) pour un aéronef (100), ayant :
un premier accumulateur d'énergie (10) destiné à fournir une énergie électrique ;
un second accumulateur d'énergie (20) destiné à fournir une énergie électrique ;
au moins un entraînement électrique (30) destiné à fournir une puissance d'entraînement pour l'aéronef ;
une unité de distribution d'énergie (40) destinée à transmettre l'énergie électrique fournie par le premier accumulateur d'énergie (10) et l'énergie électrique fournie par le second accumulateur d'énergie (20) à l'au moins un entraînement électrique (30) ;
l'unité de distribution d'énergie (40) étant conçue pour charger le second accumulateur d'énergie (20) en utilisant une première partie de l'énergie fournie par le premier accumulateur d'énergie (10) et en même temps pour transmettre une seconde partie de l'énergie fournie par le premier accumulateur d'énergie (10) à l'au moins un entraînement électrique (30), afin de fournir par conséquent la puissance d'entraînement pour l'aéronef (100) ;
**caractérisé en ce que**
le second accumulateur d'énergie (20) est configuré pour fournir de l'énergie électrique à l'entraînement électrique (30) de telle sorte que l'énergie électrique qui est fournie par le second accumulateur d'énergie (20) est proportionnelle à une probabilité de défaillance de faisceaux individuels de cellules de batterie ou de cellules de batterie du premier accumulateur d'énergie (10) .

2. Système d'entraînement (1) selon la revendication 1,
l'unité de distribution d'énergie (40) étant conçue pour transmettre l'énergie électrique fournie par le second accumulateur d'énergie (20) à l'au moins un entraînement électrique (30) uniquement si la puissance qui est requise par le dispositif d'entrainement (30) dépasse une valeur limite prédéfinie.

3. Système d'entraînement (1) selon la revendication 2,
l'unité de distribution d'énergie (40) étant conçue pour transmettre uniquement l'énergie électrique fournie par le premier accumulateur d'énergie (10) à l'au moins un entraînement électrique (30) si la puissance requise par le dispositif d'entraînement (30) est inférieure à la valeur limite prédéfinie.

4. Système d'entraînement (1) selon l'une des revendications précédentes,
le second accumulateur d'énergie (20) étant un supercondensateur (21).

5. Système d'entraînement (1) selon l'une des revendications précédentes,
le premier accumulateur d'énergie (10) ayant un module de cellules de batterie (11) avec une multiplicité de faisceaux (12) de cellules de batterie (13) connectés en série, la multiplicité de faisceaux (12) étant chacun connectés en parallèle les uns aux autres.

6. Système d'entraînement (1) selon l'une des revendications précédentes,
un rapport entre un quotient de la densité de puissance et de la densité d'énergie du second accumulateur d'énergie et un quotient de la densité de puissance et de la densité d'énergie du premier accumulateur d'énergie étant d'au moins 30, de préférence d'au moins 60.

7. Système d'entraînement (1) selon l'une des revendications précédentes,
le système d'entraînement (100) ayant au moins un moteur (31) qui est conçu pour fournir la puissance d'entraînement requise pour l'aéronef (100) pendant un vol de croisière, en utilisant exclusivement l'énergie électrique fournie par le premier accumulateur d'énergie (10) .

8. Aéronef (100) ayant un système d'entraînement (1) selon l'une des revendications précédentes.

9. Aéronef selon la revendication 8,
l'aéronef (100) étant un aéronef piloté.

10. Procédé de fourniture de puissance d'entraînement d'un aéronef (100), ayant les étapes de :
fourniture d'énergie électrique à partir d'un premier accumulateur d'énergie (10, S1) ;
fourniture d'énergie électrique à partir d'un second accumulateur d'énergie (20, S2) ;
transmission simultanée de l'énergie électrique fournie par le premier accumulateur d'énergie (10) et de l'énergie électrique fournie par le second accumulateur d'énergie (20) à au moins un entraînement électrique (30) de l'aéronef (100) pendant un processus de décollage de l'aéronef (100), le second accumulateur d'énergie (20) étant au moins partiellement déchargé (S3) ;
charge du second accumulateur d'énergie (20) au moyen du premier accumulateur d'énergie (10) à une valeur de consigne prédéfinie d'un état de charge du second accumulateur d'énergie (20) après la décharge au moins partielle du second accumulateur d'énergie (20), la charge du second accumulateur d'énergie (20) ayant lieu pendant un vol de croisière de l'aéronef (100) (S4) ;
**caractérisé en ce que**
le second accumulateur d'énergie (20) est configuré pour fournir de l'énergie électrique à l'entraînement électrique (30) de telle sorte que l'énergie électrique qui est fournie par le second accumulateur d'énergie (20) est proportionnelle à une probabilité de défaillance de faisceaux individuels de cellules de batterie ou de cellules de batterie du premier accumulateur d'énergie (10) .

11. Procédé selon la revendication 10, comprenant :
la transmission simultanée de l'énergie électrique fournie par le premier accumulateur d'énergie (10) et de l'énergie électrique fournie par le second accumulateur d'énergie (20) à l'au moins un entraînement électrique (30) de l'aéronef (100) pendant un processus d'atterrissage de l'aéronef (100), le second accumulateur d'énergie (20) étant au moins partiellement déchargé (S5).

12. Procédé selon la revendication 11, comprenant :
la transmission de l'énergie électrique fournie par le second accumulateur d'énergie (20) à l'au moins un entraînement électrique (30) de l'aéronef (100) exclusivement pendant le processus de décollage et le processus d'atterrissage de l'aéronef (100, S3a).
